Europäisches Patentamt

European Patent Office

Office européen des brevets

(11) Publication number: **0 187 676 B1**

## EUROPEAN PATENT SPECIFICATION

(45) Date of publication of patent specification: 07.08.91    (51) Int. Cl.⁵: **C08F 14/06**, C08F 2/18, B01J 19/18

(21) Application number: **86100285.5**

(22) Date of filing: **10.01.86**

The file contains technical information submitted after the application was filed and not included in this specification

(54) **A process for producing vinyl chloride resin.**

(30) Priority: **10.01.85 JP 3115/85**

(43) Date of publication of application:
**16.07.86 Bulletin 86/29**

(45) Publication of the grant of the patent:
**07.08.91 Bulletin 91/32**

(84) Designated Contracting States:
**BE DE GB**

(56) References cited:
**FR-A- 2 256 183**

(73) Proprietor: **KANEGAFUCHI KAGAKU KOGYO KABUSHIKI KAISHA**
**2-4 Nakanoshima 3-chome**
**Kita-ku Osaka-shi Osaka-fu(JP)**

(72) Inventor: **Kobayashi, Teiji**
**12-34, 1-chome, Nishihata**
**Takasago-shi Hyogo-ken(JP)**
Inventor: **Tomishima, Yoshio**
**9-7, 5-chome, Tsutsujigaoka Tarumi-ku**
**Kobe-shi Hyogo-ken(JP)**
Inventor: **Yamamoto, Taizo**
**2-63, Okihama-machi Takasago-cho**
**Takasago-shi Hyogo-ken(JP)**
Inventor: **Nojima, Yasuhiro**
**3781-26, Nishiyama Higashiyama Ohkuradani**
**Akashi-shi Hyogo-ken(JP)**

(74) Representative: **Patentanwälte Grünecker, Kinkeldey, Stockmair & Partner**
**Maximilianstrasse 58**
**W-8000 München 22(DE)**

## Description

The present invention relates to a process for producing vinyl chloride resin high in polymerization productivity, high in bulk density and with less fish eyes by the use of a polymerization reactor equipped with a reflux condenser.

In the production of vinyl chloride resin it is often the case that a reflux condenser is used for improving the productivity as well as for energy-saving but this is accompanied by problems that the suspension polymerization under cooling by a reflux condenser often causes an increased porosity in the particle interior and affects the smoothness of the particle's surface. The resulting deterioration of the filling property causes a lowering of the bulk density and an increase of fish eyes. It is well known that the bulk density is correlated with the productivity of the vinyl chloride resin and that a lowering of the bulk density causes a lowering of the extruder's output to thus result in aggravation of productivity in processing. As means of improving the bulk density of polyvinyl chloride, a method, for instance, is known of adding a vinyl chloride monomer in the course of polymerization (Japanese Laid-Open Patent Application No. 97679/75); but the vinyl chloride resin obtained by this process is known to have many fish eyes and, moreover, the residual monomer in the resin is difficult to remove.

Meanwhile, the market's need for less fish eyes of vinyl chloride resin (hereinafter referred to as "PVC") has become severer year after year. The general tendency is that fish eyes of PVC plasticized with a high polymer plasticizer of relatively low plasticizing ability and high viscosity such as of polyester series, are problematic. In order to solve the problem of fish eyes, it is recommended to prevent the formation of low-porosity particles caused by low dispersion frequency through the best possible improvement of dispersion-coalescence frequency of monomer droplets and also to improve the homogeneity of the particles in the polymerized system through local monomer addition polymerization due to monomer condensed in the reflux condenser taking place in the top layer of polymer suspension through inhibition of bubbling in the middle stage of polymerization and thereafter. When a reflux condenser is used, gas generating from the monomer droplets is contained in the polymer suspension to result in lower homogeneity attainable by stirring and results in aggravation of fish eyes through bubbling in which the polymer particles form a floating creamy layer on the polymer suspension in the middle stage of the polymerization and thereafter.

Further, when the bubbling is remarkable another problem arises in that the polymer suspension overflows into the reflux condenser and its piping to cause deposition of scales to adversely affect the product's quality, same also causing lowering of the heat-removing capacity of the reflux condenser and seriously affecting the safety control of the producing process.

It is the object of the present invention to provide a process for producing a vinyl chloride resin by the use of a polymerization reactor equipped with a reflux condenser safe from the above-mentioned problems of the conventional process, higher in bulk density and with less fish eyes. Said object is achieved by a process for producing a vinyl chloride resin in a suspension polymerisation system of a vinyl chloride monomer and other monomers capable of copolymerizing therewith in the presence of a suspending agent and of a polymerization initiator, in a polymerization reactor equipped with a reflux condenser in the gas phase portion of the polymerization reactor or outside the polymerization reactor, characterized by using stirring blades, each being a brumagine-type impeller equipped with auxiliary blade(s) (4) inclined with respect to the level rotary direction standing on the outer surface of each of the main blades (3) attached to the tip thereof, the water/monomer ratio of initial charging is controlled in 1 range of 0.8-1.0, polymerization is conducted in the first stage of polymerization to not more than 50 % by weight in polymer conversion, then in the second stage of polymerization, polymerization is conducted at a temperature of 3-10 °C higher than the polymerization temperature in the first stage, with water being added continuously or intermittently in the course of the polymerization not more than making up for the volumetrical contraction resulting from the progress of the polymerization so that upon completion of the polymerization the water/monomer ratio is controlled in the range of 1.0-1.4.

Figure 1 is a plane view of the stirring blades used in the process of the present invention.

Figure 2 is a front elevation of the main blade, and

Figures 3 through 14 are perspective views showing the essential part of the embodiments of the stirring blades used in the process of the present invention.

It is known that the degree of lowering of a resin's bulk density when a reflux condenser is used increases with increasing quantity of heat removed by the reflux condenser (hereinafter referred to as "Qrc") and as in the present invention (1) to set the water/monomer ratio at the time of initial charging to a low value (i.e. increasing the charge amount of vinyl chloride monomer) and (2) to shift the polymerization temperature from a low to a high level, both meaning enhancement of the generation of heat in the course of polymerization. Nevertheless, there is a certain innate limit to the heat removing capacity a reactor jacket and therefore it is inevitable to increase Qrc of the reflux condenser, but this process measure was supposed to be counter to the desired increase of the bulk density. Surprisingly, however, the present inventors discovered that these two technical means enable a substantial increase of Qrc without causing a lowering of the bulk density.

Brumagine-type impellers are rational means of stirring for use in suspension polymerization of vinyl chloride being capable of high-speed spinning, same requiring no large driving force and high in shearing effect; however, it was supposed to be relatively less capable of producing a vertical flow and problematic for homogeneous stirring of the system desired.

The remarkable improvement of PVC with regard to fish eyes by use of the stirring blades in the process of the present invention is attributable to not only improved stirring efficiency and resultant dispersion-coalescence frequency in the early stage of polymerization and improved homogeneity of particles in the polymerization system but also to the stirring blades' capability to produce a vertical flow and vortex suction effect which is effective for preventing the bubbling characteristic owing to the use of the reflux condenser as well as for improving the homogeneity of the polymer suspension.

The stirring blades used in the process of the present invention are described below with reference to the drawings.

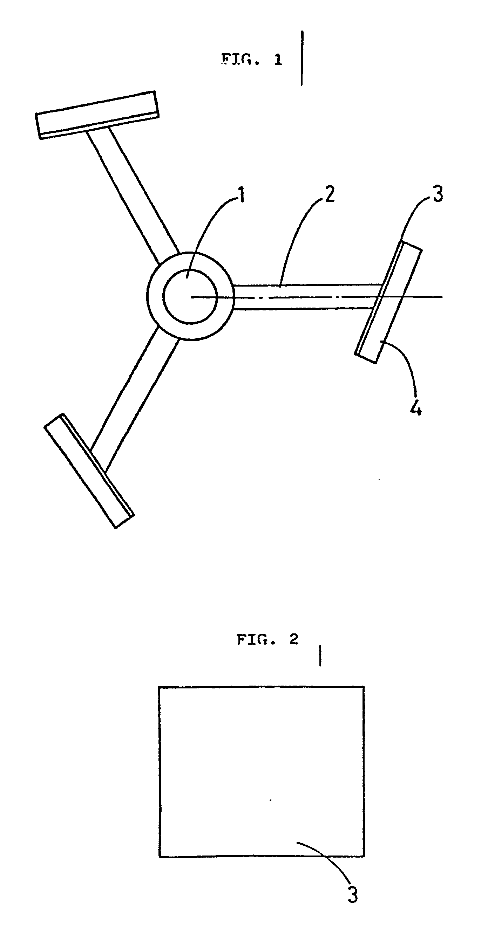

Figure 1 is a plane view of the stirring blades used in the present invention and Figure 2 is a front view of the main blade thereof. In these figures, the main blade 3 is attached to the supporting portion 2 extending in the normal direction from the vertical shaft 1 (A Brumagine-type impeller is normal in such a construction).
On the outer surface of the main blade 3 an auxiliary blade 4 is attached at a given inclination.

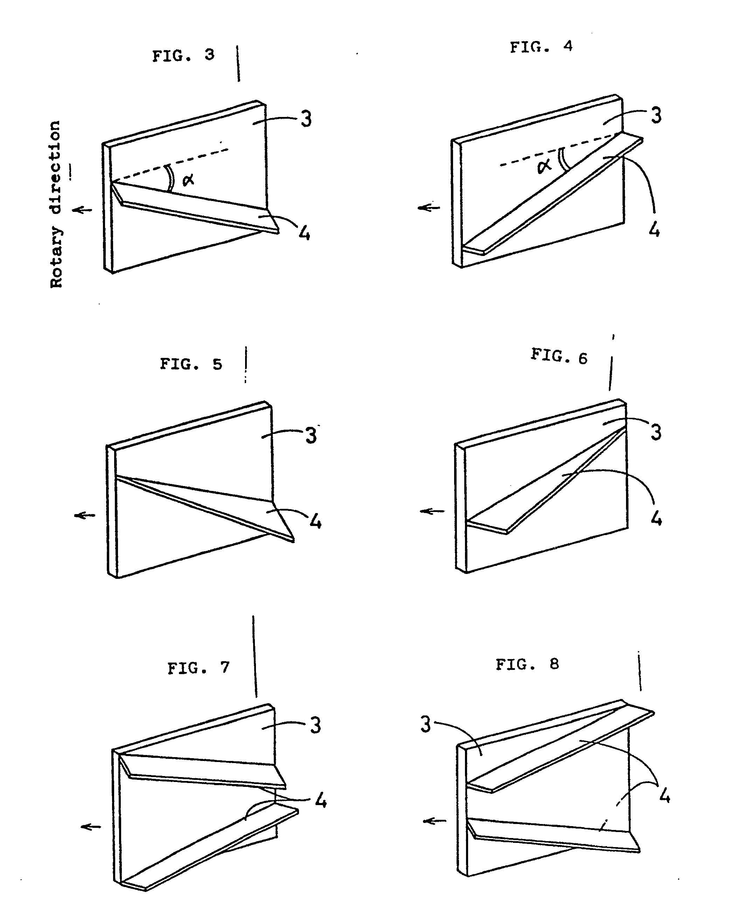

Figures 3 through 14 are perspective views showing alternative embodiments of the main blade 3 and auxiliary blade 4 used in the present invention.

In the process of the present invention the auxiliary blade 4 is set at a given angle of inclination to the level rotary direction, namely , an angle of elevation or depression ($\alpha$).

The angle of inclination is not particularly specified, but a generally preferred range is from 5-30$^{\circ}$. If it is less than 5$^{\circ}$, no sufficient vertical flow can be generated to result in insufficient general stirring effect, while when it is more than 30$^{\circ}$, it is likely to result in generation of a too vigorous vertical flow, same causing too much power consumption and also an excessive dispersion with a risk of abnormal polymerization.

The area of each auxiliary blade 4 is preferred to be in a range of from 20-60% of the area of the main blade 3. If it is less than 20%, the effect produced by the use of the auxiliary blade (shearing effect, stirring effect) is insufficient, whereas when it is more than 60%, too much power consumption results as well as an excessive dispersion with a risk of abnormal polymerization. Furthermore, scales are likely to deposit and a lot of effort and time are required for removal thereof.

The auxiliary blade 4 is not necessarily set perpendicular to the main blade 3 and an inclined attachment within a range of from 45-35$^{\circ}$ is acceptable. The number of auxiliary blades is not specified either. It may be properly decided according to the size of the main blade 3 but normally 1-2 of them per one main blade will give a favorable result.

The shape of the auxiliary blade 4 is also not particularly specified and, as shown in the drawings it may be rectangular, rhombic or triangular if it has a specified surface area. It need not be formed to cover the entire width of the main blade 3 and may also be interrupted. Its thickness is also not particularly specified and may be properly decided according to the sizes of the main blade 3 and the auxiliary blade 4. If more than one auxiliary blade is set to one main blade, they are not necessarily of the same shape and dimension and those of different shapes and dimensions may also be used.

The auxiliary blade 4 may be welded to the main blade 3 to result in a monoblock or prepared separately and secured together by mechanical means such as bolting.

According to the process of the present invention the water/monomer ratio at the time of initial charging is set within a range of from 0.8-1.0 and the water/monomer ratio upon completion of the polymerization is controlled within a range of from 1.0-1.4, preferably within a range of from 1.0-1.2, by adding water continuously or intermittently during the course of polymerization being careful not to exceed the volumetrical contraction resulting from the progress of polymerization.

The addition of water is done continuously or intermittently to make up for the volumetrical contraction resulting from the progress of the polymerisation, but it is preferred to be done continuously when the stability of the product's quality, the controllability of the inside temperature and the desired prevention of bubbling are taken into consideration.

The volumetrical contraction resulting from the progress of the polymerization ($\Delta$ V) is the quantity

EP 0 187 676 B1

calculated by the following formula.

$$\Delta V = (Monomer\ charging) \times (Conversion) \times [(1/monomer\ density) - (1/1.4)]$$

When the water/monomer ratio at the time of initial charging is less than 0.8, coarse particles generate; while, when it is in excess of 1.0, the bulk density increasing effect is reduced.

When the water/monomer ratio upon completion of the polymerization is less than 1.0, the particle size becomes rough and the bulk density tends to get lower; whereas, when the amount of water added is more than enough to make up for the volumetrical contraction, it results in an increase of the slurry volume in the polymerization system and might, in extreme cases, cause overflowing of the polymer slurry into the piping or the interior of the reflux condenser to cause deposition of scales. This results in a deterioration of the quality (fish eyes). Hence, the water/monomer ratio upon completion of the polymerization should not be more than 1.4, preferably not exceeding 1.2.

Further, according to the process of the present invention, the polymerization is conducted in the first stage to not more than 50% by weight in terms of polymer conversion and the polymerization in the second stage is conducted at a temperature of 3-10°C higher than in the first stage.

When the polymerization temperature is changed, the conversion is not more than 50% by weight, preferably 10-50% by weight, and more preferably 15-50 % by weight. If it is less than 10 % by weight, fish eyes tend to increase, while, when it is in excess of 50 % by weight, the bulk density increasing effect is reduced.

Other monomers which can be copolymerized with vinyl chloride in the process of the present invention are, for instance, olefins such as ethylene and propylene, vinyl esters such as vinyl acetate and vinyl stearate, (meth)acrylate esters such as methyl acrylate and methyl methacrylate, esters or anhydrides of acids such as maleic acid and fumaric acid, nitrile compounds such as acrylonitrile and vinylidene compounds such as vinylidene chloride.

As polymerization initiators used in the process of the present invention, initiators are included which are normally used for suspension polymerization of vinyl chloride namely organic peroxides such as lauroyl peroxide, 3,5,5-trimethylhexanoyl peroxide, t-butyl peroxypivalate, t-butyl peroxyneodecanoate, di-isopropyl peroxydicarbonate, di-2-ethylhexyl peroxydicarbonate and acetyl cyclohexylsulfonyl peroxide, and azo compounds such as a, $\alpha'$-azobis -isobutylonitrile and $\alpha$, $\alpha'$-azobis-2,4-dimethyl valeronitrile. These are used either alone or in combination with two or more.

As suspending agents used in the process of the present invention, any known suspending agents such as partially saponified polyvinyl alcohol, vinyl acetate-maleic anhydride copolymer, styrene-maleic anhydride copolymer, polyvinyl pyrolidone, gelatine, starch, methyl cellulose, hydroxypropyl methylcellulose and polyethylene oxide either alone or in combination may be used. Preferred suspending agents are partially saponified polyvinyl alcohol and/or hydroxypropyl methylcellulose in view of the quality and the polymerization stability, A preferred amount of the above-mentioned suspending agent is 0.01-1 parts by weight per 100 parts by weight of the vinyl chloride monomer, although there is no particular limitation.

It is also possible to use a molecular weight adjusting agent in the process of the present invention.

The initiator, suspending agent and molecular weight adjusting agent may be added at once to the polymerization system at the beginning of the polymerization. It is also possible to add them in portions during the course of the polymerization.

The polymerization temperature in the process of the present invention may normally be in a range of from 40-75°C, although there is no particular limitation.

According to the present invention, it is possible to conduct the suspension polymerization in a polymerization reactor equipped with a reflux condenser for the production of PVC high in bulk density with less fish eyes and it is also possible to increase the monomer charge without risk of suspension overflowing into the piping or the interior of reflux condenser, which along with a shortening of the polymerization time, enables a sizable improvement of productivity, the industrial significance of the present invention being thus remarkable.

The following examples illustrate the present invention.

In the description below the evaluation of the quality of the product is made by the following methods.
Bulk density: According to JIS K-6721.
Particle size distribution: Sifting and shaking method.
Porosity:
The porosity was determined by use of a mercury compression type porosimeter of Aminco Inc., U.S.A.

4

(Model 5-7118) through measurement of the volume of mercury pressed in per 100 g PVC at an absolute pressure of 213.7-6970.6 kPa (31-1011 psi) (pore size 0.17-5.8um).

Fish eyes:

100 parts by weight of PVC obtained by polymerization, 50 parts by weight of a plasticizer [PN 250 (adipic acid-type polyester: molecular weight approx. 2,000), maker: Adeca Argus Inc.], 3 parts of weight of a tribase, 0.5 parts by weight of stearic acid, 0.4 parts by weight of titanium dioxide and 0.2 parts by weight of carbon black were mixed, after still-standing for 3 hours the mixture was milled through 20.3 cm (8 inch)-rolls at 150°C (sheet thickness: 0.2 mm). were cut out after 8 min and 10 min of milling and the number of transparent particles (fish eyes) per 5 cm x 5 cm sheet were counted.

## Example 1

90 parts by weight of water having dissolved therein 0.07 parts by weight of a partially saponified polyvinyl alcohol were charged into a polymerization reactor (1.7 $m^3$ in capacity) provided with a brumagine-type impeller having attached thereto auxiliary blades as shown in Figure 8 and also equipped with a reflux condenser having a heat transfer area of 5 $m^2$, 0.024 parts by weight of di-2-ethylhexyl peroxy-di-carbonate and 0.024 parts by weight of t-butyl peroxy-neodecanoate were added as initiators, 100 parts by weight of vinyl chloride monomer (682 kg) was charged after deaeration, the temperature was raised to 54°C (polymerization temperature in the first stage) for polymerization to start, the flow of cooling water was started through the reflux condenser when the polymer conversion reached 3% and the polymerization was conducted with Qrc being adjusted to 115.1 MJ/h (27,500 kcal/h) 30 min after the start of flowing cooling water. When the polymer conversion had reached 35%, the polymerization temperature was raised to 59°C (polymerization temperature in the 2nd stage) and the polymerization was continued with Qrc readjusted to 167.5 MJ/h to (40,000 kcal/h). The operation of the reflux condenser was stopped when the inside pressure had lowered by 98 kPa (1 kg/cm$^2$) from the steady pressure corresponding to the polymerisation temperature in the 2nd stage to recover the unpolymerized monomer. The slurry was then dehydrated and dried in a fluidized bed drier for PVC to be obtained. Immediately after the start of the polymerization, water was continuously added at a constant rate by use of a reciprocating pump during the period of polymerization so that the water/monomer ratio at the start of recovery (upon completion of polymerization) was adjusted to 1.1 (total amount of water added: 20 parts by weight).

The resulting PVC was quite satisfactory with regard to bulk density and fish eyes as shown in Table 1 with no indication of polymer suspension overflowing into the reflux condenser.

## Example 2

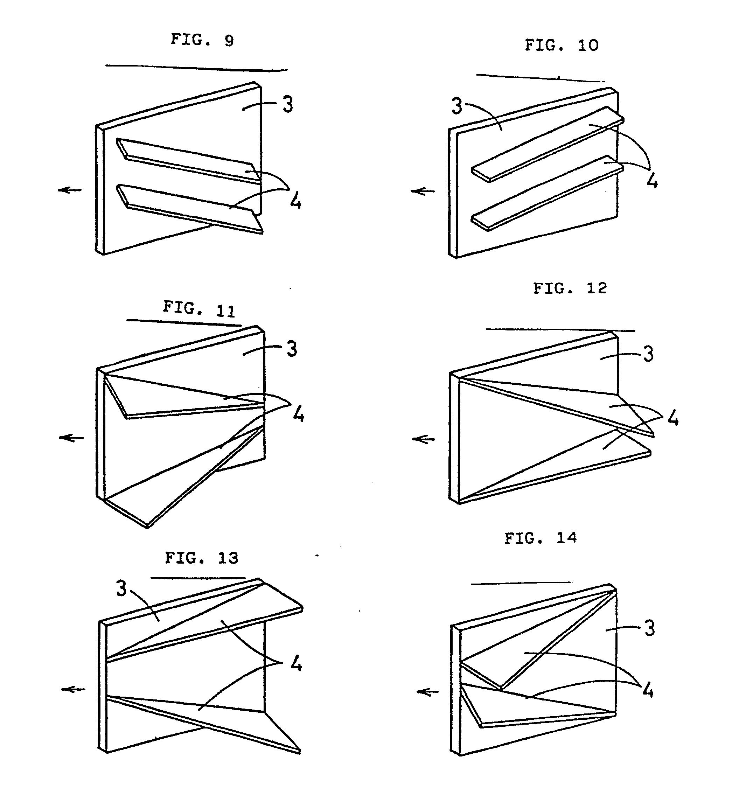

The polymerization was conducted in the same way as in Example 1 except that the auxiliary blades were changed as shown in Figure 13 and the resulting polymer was dehydrated and dried.

The resulting PVC was satisfactory with regard to bulk density and fish eyes as shown in Table 1 with no indication of polymer suspension overflowing into the reflux condenser.

## Example 3

The polymerization was conducted in the same way as Example 1 except that the polymerization temperature was changed when the conversion reached 50% and the polymer was dehydrated and dried.

The resulting PVC was satisfactory with regard to bulk density and fish eyes as shown in Table 1 with no indication of overflowing of polymer suspension into the reflux condenser.

## Example 4

The polymerization was conducted in the same way as in Example 1,except that the polymerization temperature in the first stage was adjusted to 52°C and in the second stage to 62°C and the Qrc of the reflux condenser at the polymerizing temperatures in the first and second stages were adjusted to 94.2 MJ/h (22,500 kcal/h) and 198.9 MJ/h (47,500 kcal/h), respectively ,and the polymer was dehydrated and dried.

The resulting PVC was satisfactory with regard to bulk density and fish eyes as shown in Table 1 with no indication of overflowing of polymer suspension into the reflux condenser.

## Example 5

The polymerization was conducted in the same way as in Example 1, except that the water/monomer ratio at the time of initial charging was adjusted to 1.0 without changing the total charging volume. 651 kg of vinyl chloride monomer was charged and water was added so that the water/monomer ratio at the time of starting the recovery of unpolymerized monomer was adjusted to 1.4 (total amount of water added: 40 parts by weight and Qrc at the polymerization temperatures in the first and second stages were adjusted to 111.0 MJ/h (26,500 kcal/h) and 159.1 MJ/h (38,000 kcal/h), respectively, and the polymer was dehydrated and dried.

The resulting PVC was satisfactory with regard to bulk density and fish eyes as shown in Table 1 with no indication of overflowing of polymer suspension into the reflux condenser.

Control Example 1

The polymerization was conducted in the same way as in Example 1, except that an ordinary brumagine-type impeller was used with no auxiliary blade. The resulting PVC contained a lot of fish eyes. The result is shown in Table 1.

Control Example 2

The polymerization was conducted in the same way as in Example 1, except that the polymerization temperature was changed when the conversion reached 60%. The resulting PVC was low in bulk density.

Control Example 3

The polymerization was conducted in the same way as in Example 1, except that the polymerization temperature was set at 57°C for both first and second stages and Qrc was adjusted to 142.4 MJ/h (34,000 kcal/h). The resulting PVC was low in bulk density.

Control Example 4

The polymerization was conducted in the same way as Example 1, except that the polymerization temperature in the first stage was set at 49.5°C and that in the second stage at 65°C and Qrc at the polymerization temperatures in the first and second stages was adjusted to 71.2 MJ/h (17,000 kcal/h) and 213.5 MJ/h (51,000 kcal/h), respectively. The resulting PVC had a lot of fish eyes.

Control Example 5

The polymerization was conducted in the same way as in Example 1, except that the water/monomer ratio at the time of initial charging was adjusted to 0.7 without changing the total charging volume rate. 755 kg of vinyl chloride monomer was charged and water was added so that the water/monomer ratio at the time of starting the recovery was adjusted to 1.1 (total amount of water added: 40 parts by weight) and Qrc at the polymerization temperatures in the first and second stages were adjusted to 125.6 MJ/h (30,000 kcal/h) and 184.2 MJ/h (44,000 kcal/h). respectively. The resulting PVC contained a lot of coarse particles.

Control Example 6

The polymerization was conducted in the same way as in Example 1 except that the water/monomer ratio at the time of initial charging was adjusted to 1.1 without changing the total charging volume (charged quantity of vinyl chloride monomer: 622 kg). Water was added so that the water/monomer ratio at the time of starting the recovery was adjusted to 1.4 (total amount of water added: 30 parts by weight) and Qrc at the polymerization temperatures in the first and second stages were adjusted to 106.3 MJ/h (25,400 kcal/h) and 150.7 MJ/h (36,000 kcal/h), respectively. The resulting PVC was low in bulk density.

Control Example 7

The polymerization was conducted in the same way as in Example 1, except that an ordinary brumagine-type impeller without any auxiliary blade was used. The water/monomer ratio at the time of initial charging was adjusted to 1.2 without changing total charging volume (charged quantity of vinyl chloride monomer: 600 kg) and no water was added during the course of polymerization. Qrc was adjusted to 125.6 MJ/h (30,000 kcal/h) throughout the polymerization. The resulting PVC was low in bulk density and had a lot of fish eyes.

Control Example 8

120 parts by weight of water having 0.07 parts by weight of a partially saponified polyvinyl alcohol dissolved therein was charged into a polymerization reactor (1.7 m³ in capacity) provided with an ordinary brumagine-type impeller without any auxiliary blade, 0.024 parts by weight of di-2-ethylhexyl peroxy-dicarbonate and 0.024 parts by weight of t-butyl peroxyneodecanoate were added as initiators. 100 parts by weight of vinyl chloride monomer (600 kg) was charged after deaeration, the temperature was raised to 57°C for starting the polymerization. Unpolymerized monomer was recovered when the inside pressure had lowered by 98 kPa (1 kg cm²) the steady pressure corresponding to the polymerization temperature. Then the slurry was dehydrated and dried in a fluidized bed drier for PVC to be obtained. During the course of the polymerization, no addition of water was made and no reflux condenser was used. The resulting PVC was 0.525 in bulk density and contained 75 fish eyes at the 8th minute and 23 at the 10th minute.

Table 1

| | Example | | | | | Control Example | | | | | | | |
|---|---|---|---|---|---|---|---|---|---|---|---|---|---|
| | 1 | 2 | 3 | 4 | 5 | 1 | 2 | 3 | 4 | 5 | 6 | 7 | 8 |
| Reflux condenser | Used | " | " | " | " | " | " | " | " | " | " | " | Not used |
| Auxiliary blade Shape | Fig.8 Rectang. | Fig.13 " | Fig.8 " | " | " | None | Fig.8 Rectang. | " | " | " | " | None | None |
| Number/one main blade | 2 | " | " | " | " | None | 2 | " | " | " | " | None | None |
| Angle/elevation (α) | 20 | " | " | " | " | None | 20 | " | " | " | " | None | None |
| Area % against main blade/aux.blade | 30 | " | " | " | " | None | 30 | " | " | " | " | None | None |
| Water/monomer ratio Time/initial charging | 0.9 | " | " | " | 1.0 | 0.9 | " | " | " | 0.7 | 1.1 | 1.2 | — |
| Start of recovery | 1.1 | " | " | " | 1.4 | 1.1 | " | " | " | 1.1 | 1.4 | 1.2 | — |
| Initial charge /monomer (kg) | 682 | " | " | " | 651 | 682 | " | " | " | 755 | 622 | 600 | — |
| Water added (wt.%) | 20 | " | " | " | 40 | 20 | " | " | " | 40 | 30 | — | — |
| Polymerizing temp. (°C) 1st stage | 54 | " | " | 52 | 54 | " | 54 | 57 | 49.5 | 54 | 54 | 57 | 57 |
| 2nd stage | 59 | " | " | 62 | 59 | " | 59 | 57 | 65 | 59 | 59 | 57 | 57 |
| Time of changing temp. (Conversion %) | 35 | " | 50 | 35 | " | " | 60 | — | 35 | 35 | 35 | — | — |
| Qrc MJ/h (kcal/h) 1st stage | 115.1 (27500) | " | " | 94.2 (22500) | 111.0 (26500) | 115.1 (27500) | 115.1 (27500) | 142.4 (34000) | 71.2 (17000) | 125.6 (30000) | 106.3 (25400) | 125.6 (30000) | 125.6 (30000) |
| 2nd stage | 167.5 (40000) | " | " | 198.9 (47500) | 159.1 (38000) | 167.5 (40000) | 167.5 (40000) | 142.4 (34000) | 213.5 (51000) | 184.2 (44000) | 150.7 (36000) | 125.6 (30000) | 125.6 (30000) |
| Particle size distribution (%) 250 μm (60 mesh) on | 0 | 0 | 0 | 0 | 0 | 0 | 0 | 0 | 0 | 17 | 0 | 0 | 0 |
| 250 μm - 149 μm (60-100 mesh) | 21 | 23 | 22 | 20 | 19 | 20 | 19 | 20 | 22 | 51 | 15 | 12 | 11 |
| 149 μm - 105 μm (100-145 mesh) | 63 | 61 | 63 | 63 | 62 | 65 | 65 | 64 | 63 | 30 | 72 | 70 | 68 |
| 105 μm - 74 μm (145-200 mesh) | 14 | 15 | 13 | 16 | 17 | 13 | 15 | 15 | 15 | 2 | 12 | 17 | 20 |
| 74 μm (200 mesh) pass | 2 | 1 | 2 | 1 | 2 | 2 | 1 | 1 | 1 | 0 | 1 | 1 | 1 |
| Porosity ml/100g | 24.5 | 24.3 | 24.7 | 24.0 | 25.0 | 24.0 | 26.0 | 25.5 | 21.5 | — | 26.0 | 27.5 | 25.0 |
| Bulk density | 0.535 | 0.536 | 0.530 | 0.538 | 0.530 | 0.535 | 0.515 | 0.513 | 0.545 | — | 0.519 | 0.500 | 0.525 |
| Fish eyes (piece/5cm x 5cm) 8th minute | 73 | 76 | 70 | 75 | 68 | 352 | 70 | 68 | 250 | — | 66 | 325 | 75 |
| 10th minute | 19 | 21 | 15 | 20 | 17 | 130 | 14 | 15 | 100 | — | 13 | 125 | 23 |

## Claims

1. A process for producing a vinyl chloride resin in a suspension polymerization system of a vinyl chloride monomer and other monomers capable of copolymerizing therewith in the presence of a suspending agent and of a polymerization initiator, in a polymerization reactor equipped with a reflux condenser in

8

the gas phase portion of the polymerization reactor or outside the polymerization reactor, characterized by using stirring blades, each being a brumagine-type impeller equipped with auxiliary blade(s) (4) inclined with respect to the level rotary direction standing on the outer surface of each of the main blades (3) attached to the tip thereof, the water/monomer ratio of initial charging is controlled in a range of 0.8-1.0, polymerization is conducted in the first stage of polymerization to not more than 50 % by weight in polymer conversion, then in the second stage of polymerization, polymerization is conducted at a temperature of 3-10°C higher than the polymerization temperature in the first stage, with water being added continuously or intermittenly in the course of the polymerization not more than making up for the volumetrical contraction resulting from the progress of the polymerization so that upon completion of the polymerization the water/monomer ratio is controlled in the range of 1.0-1.4.

2. The process of claim 1, wherein the water/monomer ratio upon completion of the polymerization is controlled within the range of 1.0-1.2.

3. The process of claim 1, wherein in the first stage of polymerization a polymer conversion of 10-50 % by weight is reached.

4. The process of claim 1, wherein partially saponified polyvinyl alcohol and/or hydroxypropyl methylcellulose are/is used as suspending agent.

5. The process of claim 1, wherein the auxiliary blade(s) (4) incline(s) 5-30°, angle of elevation or depression, with respect to the level rotary direction.

6. The process of claim 1, wherein the area of one auxiliary blade (4) is 20-60% of the area of one main blade (3).

7. The process of claim 1, wherein the auxiliary blade (4) is perpendicular to or inclined at 45-135° with respect to the main blade (3).

8. The process of claim 1, wherein one or two of the auxiliary blades (4) is/are provided per one main blade (3).

9. The process of claim 1, wherein the shape of the auxiliary blade (4) is rectangular, rhombic or triangular.

**Revendications**

1. Procédé de préparation d'une résine de chlorure de vinyle dans un système de polymérisation en suspension d'un monomère de chlorure de vinyle et d'autres monomères capables de copolymériser avec lui, en présence d'un agent de suspension et d'un agent d'amorçage de polymérisation, dans un réacteur de polymérisation équipé d'un réfrigérant à reflux dans la partie à phase gazeuse du réacteur de polymérisation ou à l'extérieur du réacteur de polymérisation, caractérisé par l'utilisation de pales d'agitation, chacune étant un agitateur de type brumagine équipé de pale(s) auxiliaire(s) (4) inclinées par rapport au sens de rotation de niveau existant sur la surface externe de chacune des pales principales (3) fixées à son extrémité, le rapport eau/monomère du chargement initial étant ajusté dans une gamme de 0,8 à 1,0, la polymérisation étant effectuée dans la première étape de la polymérisation jusqu'à une conversion de polymère qui n'est pas supérieure à 50 % en poids, la polymérisation étant effectuée ensuite dans la deuxième étape de polymérisation à une température de 3 à 10°C plus élevée que la température de polymérisation dans la première étape, de l'eau étant ajoutée de manière continue ou intermittente au cours de la polymérisation en une quantité qui ne dépasse pas ce qui est nécessaire pour suppléer à la contraction volumétrique résultant de la progression de la polymérisation de façon que, après achèvement de la polymérisation, le rapport eau/monomère soit ajusté dans la gamme de 1,0 à 1,4.

2. Procédé suivant la revendication 1, caractérisé en ce que le rapport eau/monomère après achèvement de la polymérisation est ajusté dans la gamme de 1,0 à 1,2.

3. Procédé suivant la revendication 1, caractérisé en ce que, dans la première étape de polymérisation, une conversion de polymère de 10 à 50 % en poids est atteinte.

4. Procédé suivant la revendication 1, caractérisé en ce que de l'alcool polyvinylique partiellement saponifié et/ou de l'hydroxypropylméthylcellulose est/sont utilisés comme agents de suspension.

5. Procédé suivant la revendication 1, caractérisé en ce que la ou les pales auxiliaires (4) sont inclinées de 5 à 30° (angle d'élévation ou de dépression) par rapport au sens de rotation de niveau.

6. Procédé suivant la revendication 1, caractérisé en ce que la surface d'une pale auxiliaire (4) est égale à 20-60 % de la surface d'une pale principale (3).

7. Procédé suivant la revendication 1, caractérisé en ce que la pale auxiliaire (4) est perpendiculaire à la pale principale (3) ou est inclinée par rapport à celle-ci à 45-135°.

8. Procédé suivant la revendication 1, caractérisé en ce qu'une ou deux des pales auxiliaires (4) est/sont prévues pour une pale principale (3).

9. Procédé suivant la revendication 1, caractérisé en ce que la forme de la pale auxiliaire (4) est rectangulaire, rhombique ou triangulaire.

**Patentansprüche**

1. Verfahren zur Herstellung eines Vinylchloridharzes in einem Suspensionspolymerisationssystem aus einem Vinylchloridmonomer und anderen Monomeren, die damit copolymerisieren können, in Gegenwart eines Suspendiermittels und eines Polymerisationsinitiators in einem Polymerisationsreaktor, ausgestattet mit einem Rückflußkondensator in dem Gasphasenteil des Polymerisationsreaktors oder außerhalb des Polymerisationsreaktors, **dadurch gekennzeichnet,** daß Rührschaufeln verwendet werden, die jeweils ein Rührer vom Brumagine-Typ sind, ausgestattet mit mindestens einer Hilfsschaufel (4), geneigt bezüglich der Füllstandsdrehrichtung, stehend auf der äußeren Oberfläche jeder der Hauptschaufeln (3), verbunden mit der Spitze davon, wobei das Wasser/Monomer-Verhältnis der Anfangsbeschickung in einem Bereich von 0,8 bis 1,0 kontrolliert wird, die Polymerisation in der ersten Stufe der Polymerisation bis zu nicht mehr als 50 Gew.-% der Polymerumwandlung durchgeführt wird, dann in der zweiten Stufe der Polymerisation die Polymerisation bei einer Temperatur von 3 bis 10°C höher als die Polymerisationstemperatur in der ersten Stufe durchgeführt wird, wobei Wasser kontinuierlich oder mit Unterbrechungen im Verlauf der Polymerisation zugegeben wird, das nicht mehr als die volumetrische Kontraktion, die sich aus dem Verlauf der Polymerisation ergibt, ausmacht, so daß bei Abschluß der Polymerisation das Wasser/Monomer-Verhältnis im Bereich von 1,0 bis 1,4 kontrolliert wird.

2. Verfahren nach Anspruch 1, worin das Wasser/Monomer-Verhältnis bei Abschluß der Polymerisation innerhalb des Bereichs von 1,0 bis 1,2 kontrolliert wird.

3. Verfahren nach Anspruch 1, worin in der ersten Stufe der Polymerisation eine Polymerumwandlung von 10 bis 50 Gew.-% erreicht wird.

4. Verfahren nach Anspruch 1, worin teilverseifter Polyvinylalkohol und/oder Hydroxypropylmethylcellulose als Suspendiermittel verwendet werden.

5. Verfahren nach Anspruch 1, worin die Hilfsschaufel (4) in einem Erhöhungs- oder Abfallwinkel von 5 bis 30° bezüglich der Füllstandsdrehrichtung geneigt ist.

6. Verfahren nach Anspruch 1, worin die Fläche einer Hilfsschaufel (4) 20 bis 60 % der Fläche einer Hauptschaufel (3) beträgt.

7. Verfahren nach Anspruch 1, worin die Hilfsschaufel (4) senkrecht zu oder ansteigend bei 45 bis 135° bezüglich der Hauptschaufel (3) ist.

8. Verfahren nach Anspruch 1, worin eine oder zwei der Hilfsschaufeln (4) pro Hauptschaufel (3) vorgesehen sind.

9. Verfahren nach Anspruch 1, worin die Form der Hilfsschaufel (4) rechteckig, rhombisch oder dreieckig ist.

FIG. 1

FIG. 2

FIG. 3

Rotary direction

3

α

4

FIG. 4

3

α

4

FIG. 5

3

4

FIG. 6

3

4

FIG. 7

3

4

FIG. 8

3

4

13

FIG. 9

FIG. 10

FIG. 11

FIG. 12

FIG. 13

FIG. 14

14